Europäisches Patentamt

European Patent Office

Office européen des brevets

(11) Publication number: **0 350 084**
**A2**

## EUROPEAN PATENT APPLICATION

(21) Application number: **89201472.1**

(22) Date of filing: **08.06.89**

(51) Int. Cl.⁴: **G05D 23/12**

(30) Priority: **04.07.88 BE 8800775**

(43) Date of publication of application:
**10.01.90 Bulletin 90/02**

(84) Designated Contracting States:
**BE GB NL**

(71) Applicant: **Hallers, Bernard Jan**
**Ph. P. Cappettilaan 13**
**NL-7071 CS Ulft(NL)**

(72) Inventor: **Hallers, Bernard Jan**
**Ph. P. Cappettilaan 13**
**NL-7071 CS Ulft(NL)**

(74) Representative: **Ottelohe, Jozef René**
**Bureau Ottelohe J.R. b.v.b.a. Fruithoflaan,**
**105 Bus 3**
**B-2600 Antwerpen (Berchem)(BE)**

(54) Thermostatic valve for heating and other apparatuses.

(57) The thermostatic valve has a passage (10) around the valve set (9) and which is connected to the supply pipe (2), a valve (12) which is larger thans the valve seat (9) and whereof the outer edge (14) overlaps the passage (10), a valve rod (16) one end of which is fastened to the valve (12) and the other end to a membrane (18) fitted in the cover (17) of the valve house (1), and a temperature sensor (6) one end of which is installed in the exhaust space (7) for the flue gases from the heating apparatus and the other end of which is in communication with the space (19) between the cover (17) and the membrane (18).

Fig.2

# Thermostatic valve for heating and other apparatuses.

The invention concerns a thermostatic valve intended in particular for heating apparatuses which in the event of no or inadequate draught immediately interrupts the supply of the heating medium such as gas to the burner of the heating apparatus so that no harmful flue gases can enter the space in which the heating apparatus is installed.

Electrical or mechanical thermostatic valves are known but these suffer from the disadvantage of being complicated and expensive in construction and easily affected by malfunctions.

In order to remedy these disadvantages a thermostatic valve has pursuant to the invention been developed as described in the main in claim 1 below of the description.

This thermostatic valve which is simple in construction works reliably in all circumstances of malfunction, even when there is a break in the temperature sensor in capillary tube form.

By way of example, and without being limitative in any way at all, a more detailed description is given below of a preferred embodiment in accordance with the invention. This description refers to the attached drawings, where :

    fig. 1 shows a vertical section through a gas fire in which the thermostatic value is installed;

    fig. 2 shows a longitudinal section of the thermostatic valve in the open position;

    fig. 3 shows a longitudinal section of the thermostatic valve in the closed position.

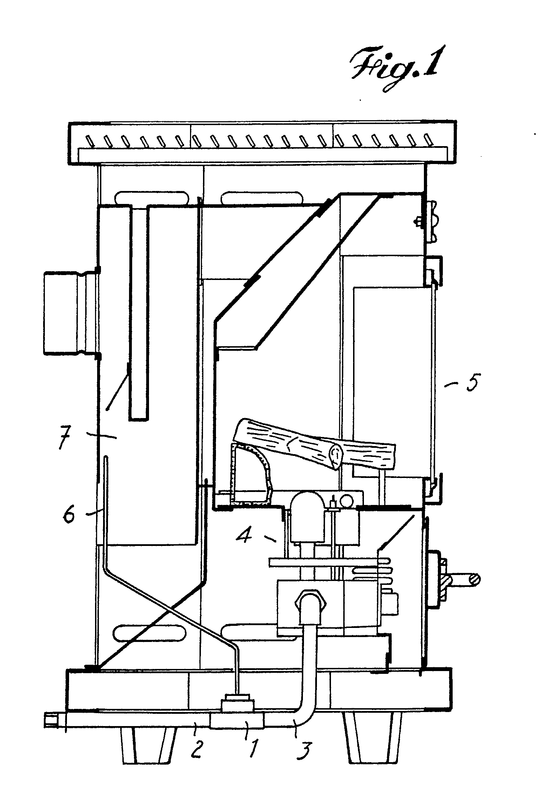

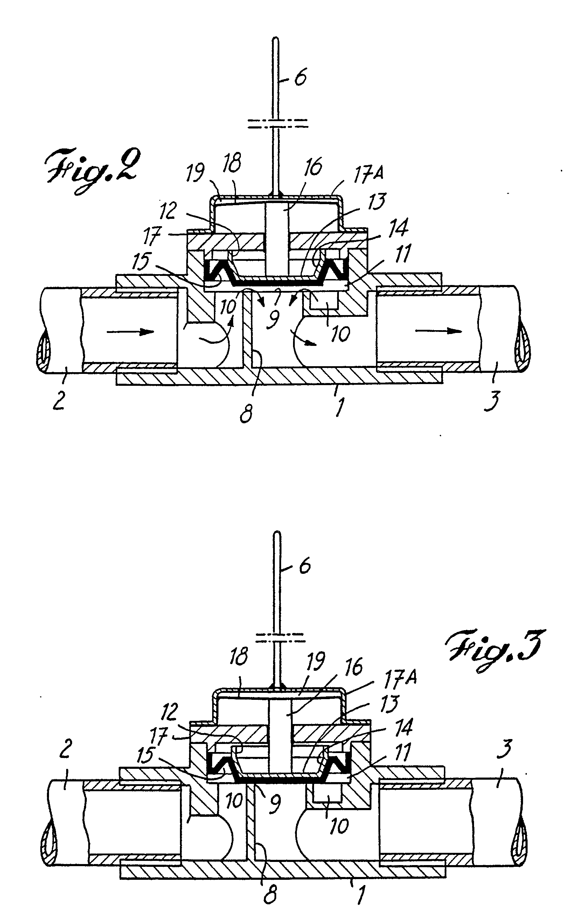

In fig. 1 it can be seen that the thermostatic valve has a valve housing 1 that is connected on the one hand to a supply pipe 2 and on the other hand to a delivery pipe 3 for the supply of gas or other medium to the burner 4 of the gas fire 5 or other heating apparatus. For the control of the thermostatic valve the valve house is provided with a temperature sensor in capillary tube form 6 the free end of which is installed in the flue gas exhaust space 7 in the vicinity of the draught damper of the heating apparatus. In figures 2 and 3 it can be seen that in the valve house 1 there is a cylindrical dividing wall 8 provided with a valve seat 9, which dividing wall separates the supply pipe 2 from the delivery pipe 3. A ring-shaped passage 10 is provided around the valve seat 9 which is connected to the supply pipe 2. Above the valve seat 9 and the ring-shaped passage 10 there is an open space 11 in the valve house 1 in which an axially movable valve 12 is fitted. This valve has a central flat section 13 which serves to close off the valve sitting 9 and a conically shaped edge 14, to which flat surface and edge an elastic closing element 15 is applied of which the outer edge is fastened in the open space 11. The conically shaped edge 14 of the valve 12 and the corresponding part of the elastic closing element 15 are located on top of the ring-shaped passage 10, so that a pressure is always exerted on this section by the gas or other medium flowing or present through the supply pipe 2. The valve 12 is mounted on a valve rod 16 which passes through the valve house cover 17 and is fitted at its other end to a membrane 18. This membrane is fastened in the upper section 17A of the cover 17 and is fitted at a small distance from the upper wall of the cover 17, so that a closed space 19 is created between the membrane and the upper wall of the cover 17. The temperature sensor in capillary tube form 6 gives out in this space and is filled with a liquid or other medium which expands greatly under the influence of heat and of which the other end is installed in the flue gas exhaust space 7 in the vicinity of the draught damper of the heating apparatus. A setting mechanism may form part of the temperature sensor in capillary tube form 6 which serves to control the movement of the valve.

During the normal operation of the heating apparatus, gas or another medium flowing through the valve house 1 and the ring-shaped passage 10, pushes the valve 12 open, so that the gas or medium reaches the burner of the heating apparatus unhindered.

When, however, there is for one reason or another no or inadequate draught in the heating apparatus or the flue to which the heating apparatus is connected, the temperature in the exhaust space 7 of the apparatus will rise, causing the liquid in the temperature sensor in capillary tube form 6 which is located in the exhaust space 7 to expand and to cause pressure to be exerted on the membrane 18 in space 19. As a result the valve rod 16 moves the valve 12 against the valve seat 9 and the supply of gas or another medium to the delivery pipe 3 and the burner 4 of the heating apparatus is interrupted, so that no more harmful flue gases can be generated.

When there is a fracture in the temperature sensor in capillary tube form 6, which is filled under a vacuum and in which the pressure is very low, atmospheric pressure will be exerted on the liquid or gas in the temperature sensor, causing pressure to be exerted on membrane 18, causing as a result valve 12 to be pressed on valve seat 9 in this case as well and the supply of gas or another medium to be cut off.

It goes without saying that the shape, the dimensions and the mutual arrangement of the components described above may differ while nevertheless remaining within the scope of this invention and that some of these parts could be replaced by others which serve the same purpose. At the same time it goes without saying that the thermostatic valve can be used in any heating apparatus whatsoever which works on any kind of gas or liquid fuel.

Finally it goes without saying that the thermostatic valve can also be used in other apparatuses and circuits filled with any medium whatsoever and in which temperature differences arise and the medium must or must not then be supplied. Perfect safety and control is then obtained with this valve for every medium.

## Claims

1.- Thermostatic valve for heating apparatuses and other apparatuses which is provided with a valve house (1), a supply pipe (2) connected to this valve house for the supply of the heating medium, a delivery pipe (3) connected to the valve house for supplying the heating medium to the burner (4) of the heating apparatus and a dividing wall (8) with valve seat(9) fitted in the valve house between the supply pipe (2) and the delivery pipe (3), characterized in that the thermostatic valve is provided with a passage (10) around the valve seat (9) which is connected to the supply pipe (2), an open space (11) in the valve house (1) above the valve seat (9), a valve (12) installed in said open space (11) and which is larger than the valve seat (9) and whereof the outer edge (14) overlaps the passage (10) around the valve seat (9), a valve rod (16) which passes through the cover (17) of the valve house (1) one end of which rod is fastened to the valve (12) and the other end of which rod is fastened to a membrane (18) fitted in the cover (17) of the valve house (1), and a temperature sensor (6) filled with a medium which expands greatly upon heating, one end of which sensor is installed in the exhaust space (7) for the flue gases of the heating apparatus and the other end of which is in communication with the space (19) between the cover (17) and the membrane (18).

2.- Thermostatic valve pursuant to claim 1, characterized in that the dividing wall (8) and the valve seat (9) are circular in shape and the passage (10) is ring shaped.

3.- Thermostatic valve pursuant to claim 2, characterized in that the valve (12) has a flat surface (13) for closing the opening in the valve seat (9) and a conically shaped edge (14) which overlaps the ring-shaped passage (10) around the valve seat (9).

4.- Thermostatic valve pursuant to claim 3, characterized in that the valve (12) is covered with an elastic closing element (15).

Fig.1

Fig.2

Fig.3